## Europäisches Patentamt
## European Patent Office
## Office européen des brevets

(11) Publication number: **0 064 979**
**B1**

# EUROPEAN PATENT SPECIFICATION

(45) Date of publication of patent specification: **07.08.85**

(21) Application number: **81901376.4**

(22) Date of filing: **24.11.80**

(86) International application number:
**PCT/US80/01581**

(87) International publication number:
**WO 82/01810 10.06.82 Gazette 82/15**

(51) Int. Cl.⁴: **A 47 B 63/00, B 65 D 5/50, B 65 D 85/00**

(54) **DISKETTE FILING AND STORAGE CONTAINER.**

(43) Date of publication of application:
**24.11.82 Bulletin 82/47**

(45) Publication of the grant of the patent:
**07.08.85 Bulletin 85/32**

(84) Designated Contracting States:
**AT CH DE FR GB LI LU NL SE**

(56) References cited:
**WO-A-80/01058**
**DE-C- 702 647**
**DE-C- 829 656**
**GB-A- 150 835**
**US-A- 464 544**
**US-A-2 233 938**
**US-A-2 244 561**
**US-A-3 065 308**
**US-A-3 554 381**
**US-A-3 696 926**
**US-A-3 817 393**
**US-A-4 084 865**
**US-A-4 168 870**
**US-A-4 239 307**

(73) Proprietor: INNOVATIVE CONCEPTS INC.
2284 Ringwood Avenue
San Jose, CA 95131 (US)

(72) Inventor: LONG, Jerry M.
211 Bean Creek
Scotts Valley, CA 95066 (US)
Inventor: WOMACK, James A.
16545 Shadyview Lane
Los Gatos, CA 95030 (US)

(74) Representative: Meddle, Alan Leonard et al
FORRESTER & BOEHMERT Widenmayerstrasse 4/I
D-8000 München 22 (DE)

Courier Press, Leamington Spa, England.

## Description

The present invention relates to a desk top storage container, and more particularly relates to a desk top storage container designed specifically for filing and storing floppy disks and diskettes.

A typical prior proposed desk top storage container is disclosed in DE—C—702647. The container described in this specification consists of a base having a bottom and vertically upstanding front wall, rear wall and side walls. A number of divider tabs are provided positioned at spaced intervals. The divider tabs, in one embodiment, are in the form of flanges extending transversely across the base of the container, extending across the entire width of the container, thus passing into the regions where each of the side walls engage the bottom. The divider tabs cooperate with a number of separator elements which are disposed at least partially within the base, and which are held in spaced apart relationship by the divider tabs. The separator means are rotatable between different inclined positions to facilitate the insertion of items into the filing and storage container.

U.S.—A—2233938 also discloses a generally similar arrangement.

In order that the invention may be more readily understood, and so that further features thereof may be appreciated, the invention will now be described, by way of example, with reference to the accompanying drawings in which:

FIGURE 1 is a perspective view showing the exterior of a closed filing and storage container in accordance with the present invention;

FIGURE 2 is a partially broken elevational view showing the rear side of the container illustrated in Figure 1;

FIGURE 3 is a side elevation illustrating the right side of the container shown in Figure 1;

FIGURE 4 is a transverse cross-sectional view taken along the line 4—4 of Figure 2;

FIGURES 4a and 4b are respectively partial cross-sectional views taken along the lines 4a and 4b in Figure 4;

FIGURE 5 is a perspective view of a container in accordance with the present invention showing the cover in one open position;

FIGURE 6 is a perspective view of a container in accordance with the present invention showing the cover in a second open position;

FIGURE 7 is an elevational view showing a file separator of a container in accordance with the present invention; and

FIGURE 8 is a side elevational view of the separator shown in Figure 7.

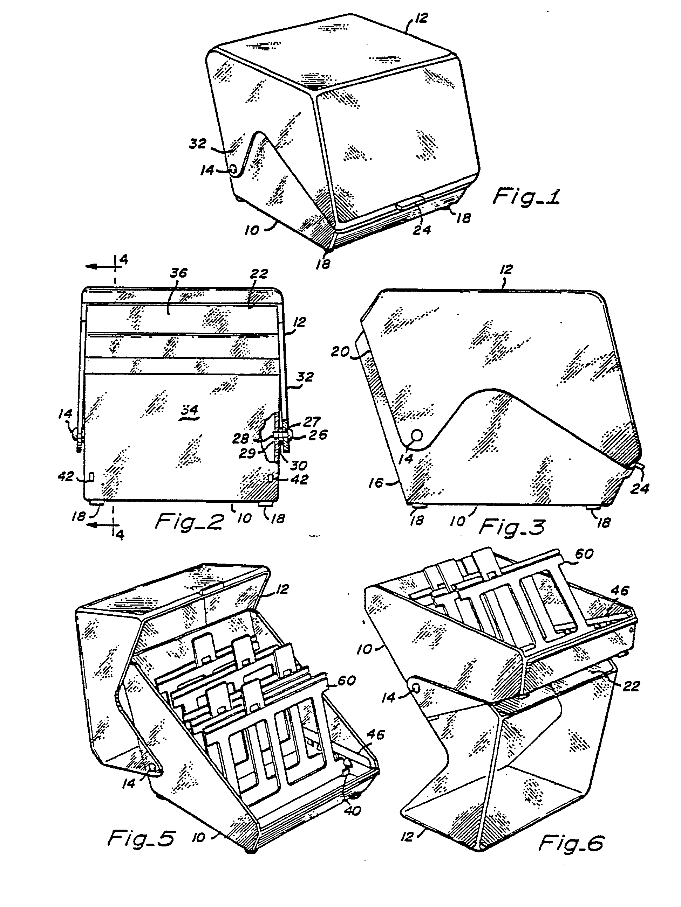

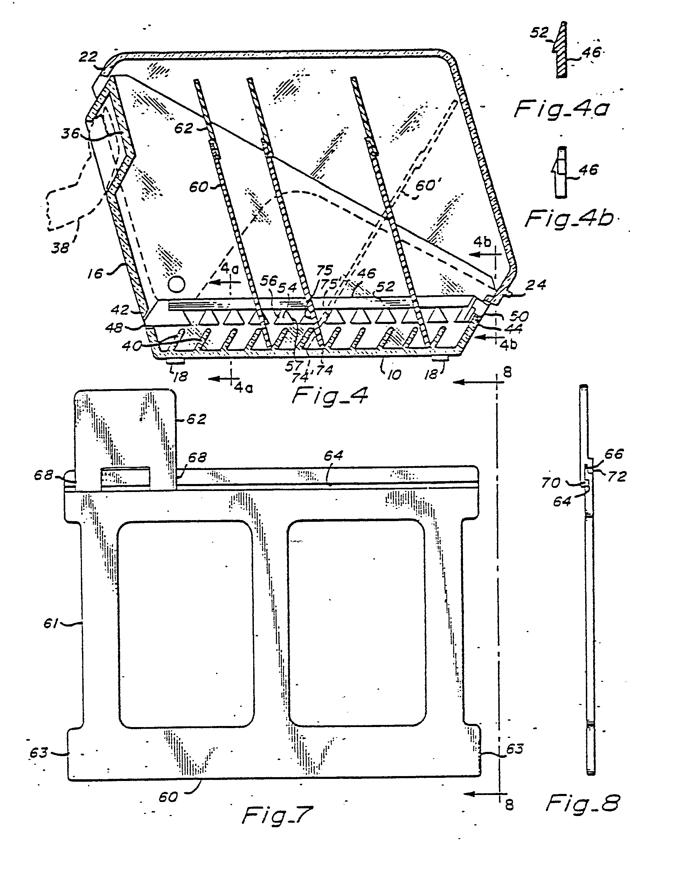

Referring now to Figures 1 to 3, it will be noted that the illustrated storage container in accordance with the invention includes a moulded base unit 10, and a moulded cover 12 which is pivotally secured to base 10 by means of hinge pins 14. As best illustrated in Figure 3, base 10 has an integral, upwardly extending rearwardly sloped rear wall 16 which, as will be further discussed below, allows floppy disks or diskettes stored within the container to recline rearwardly. The base 10 also has an integral upwardly extending, forwardly sloping front wall which is of less height than said rear wall. The base also has integral upstanding side walls. Attached to the bottom of base 10 are four rubber support buttons 18.

The cover 12 is partially open on its rear side, as illustrated at 20 in Figure 3 and 22 in Figure 2, so as to permit opening of the cover into the positions illustrated in Figures 5 and 6. The cover 12 also includes a tab 24 at the front thereof for facilitating opening of the cover.

Each hinge pin 14 includes a head or button portion 26 (Figure 2) and an integrally formed shaft portion 28 which extends through circular openings 27 and 29 in the side wall of cover 12 and base 10 respectively. A moulded annular washer 30 is tightly fitted over the shaft portion 28 in order to secure the hinge pin 14 in position. The washer 30 also serves as a spacer separating the downwardly extending extremity 32 of cover 14 from the sidewall of base 10 thereby avoiding scuffing between the two parts as the cover is rotated between its opened and closed positions.

Referring now additionally to Figure 4, which is a cross section taken along the line 4—4 in Figure 2, it will be noted that the upper portion of the rear wall 16 of base 10 is provided with a rearwardly opening recess 36 which extends across the entire rear wall, and which has a downwardly sloped upper portion. This recess and the downwardly sloped upper portion thereof provide a convenient hand-hold means by which the container can be carried by simply inserting the fingers thereinto as illustrated by the dashed lines 38 in Figure 4.

As shown in Figures 4 and 5, a plurality of upstanding divider tabs 40 are integrally formed with the base 10 and extend along each interior side of base 10. The divider tabs slope forwardly as indicated. Disposed immediately above the tab 40 is an indexing rail 46, the front and rear ends 48 and 50 of which are inserted into the openings 44 and 42 respectively, in the front and rear walls of base 10.

As indicated more clearly by the cross section shown in Figure 4a, the upper portion 52 of rail 46 is tapered so that it is narrowest at its uppermost edge, thus facilitating the insertion of diskettes into the container as will be discussed below. The lower portion of rail 46 has downwardly extending generally triangularly shaped stop tabs 54 extending therefrom. The tabs 54 are spaced apart by a distance equal to the spacing between the tabs 40. Note that the rear side edge 56 of each tab 54 slopes upwardly-forwardly so as to be parallel to the front surfaces of divider tabs 40. The rear edge of each tab 54 is spaced forwardly of the plane defined by the front surface of the corresponding tab 40 for reasons to be explained below. The forward side edge 57 of each tab 54 is inclined upwardly-rearwardly to provide a stop as discussed below.

Referring now to Figures 7 and 8 which illustrate a separator for use in the described storage container, it can be seen that the separator includes a separating portion 60 and an indexing tab portion 62 which can be selectively positioned along the top edge of the separating portion 60. To accommodate such positioning, a groove 64 is provided in the face of separating portion 60 parallel to the top edge thereof and the rear region of the upper edge thereof is formed with a recess or slot 66. The tab 62 is substantially planar and is configured to have a pair of downwardly extending spaced apart legs 68, with rearwardly extending projections 70 at their distal ends for engaging the groove 64. A centrally disposed rearwardly displaced downwardly extending leg 72 is also provided which extends behind the separating portion 60 to engage slot 66. The sides of the separating portion 60 are notched as illustrated at 61 to form laterally extending separator tabs 63 which when properly positioned engage the tabs 40 and the stop tabs 54.

The container is assembled by first gluing the rubber support buttons 18 onto the bottom of the base 10. The side rails 46 are then bowed so that the end 48 can be inserted into the opening 42 in the front wall of the base 10. The separators 60 are then bowed so that the tabs 63 can be inserted between the rails 46 and positioned between the tabs 40 and 54 as illustrated in Figures 4 and 5. Next, the pivot pins 14 are inserted through openings 27 in the downwardly extending extremities 32 of cover 14, and annular collars 30 are mounted on the shaft portions 28. With the pins so installed, the cover extremities 32 may then be deflected outwardly so that the pins 14 can clear the sidewalls of base 14. The pins 14 are then aligned with the openings 29 in the sides of base 10 and the sidewalls are allowed to spring back into position driving the hinge pins 14 into mating engagement with the openings 29.

As illustrated in Figures 5 and 6, when in use, the cover 12 can be opened into the position shown in Figure 5 so that the rear portion thereof rests upon the supporting surface. In such a position, access is readily had to any floppy disks stored within the base between the separators. Additionally, the cover 12 can be rotated further rearwardly, with base 10 raised such that it assumes the position illustrated in Figure 6. The cover 12 thus provides a stand for elevating the base 10 above the supporting surface, if desired.

In Figure 4, it is apparent that each separator will normally be positioned inclining to the rear with the lower edge thereof engaging the rear side of a pair of aligned divider tabs 40, as illustrated at 74, and the upper portion of each separator tab 63 resting against the forward most side edges of a tab 54, as indicated at 75. The separator can also be rotated into a forwardly inclining position as illustrated by the dashed lines 60', whereby the lower edge thereof engages the front sides of a pair of tabs 40, as indicated at 74', and the upper portion of each separator tab 63 engages the rear edge of a tab 54, as illustrated at 75'.

Note that in the illustrated embodiment, as many as 11 separators can be utilized to separate as many floppy disks as can be stored within the container. Note also that since the uppermost portions 52 of side rails 46 are tapered or bevelled, a floppy disk can be easily inserted between any two of the separators without interference with either the tabs 40 or the tabs 54. The described container therefore provides a convenient means of storing a large number of floppy disks on a dek top, readily accessible to a typist or operator using a word processor or other computerized device. Since the container is both light and readily portable, it can also be easily removed to a storage area and be replaced by another container.

It will be appreciated that the above described preferred embodiment of the invention comprises a storage container, suitable for floppy disks and diskettes, which is highly functional, simple in construction, yet attractive in design. The described container can be readily manufactured using injection moulding techniques, and the container has means for separating and identifying various disks, diskettes or the like filed therewithin. It will be understood that in the described embodiments all the component parts (except the rubber support buttons and possibly also the hinge pins) are of a moulded plastics material, and the various part are snap-fitted into engagement with each other, requiring no special assembly tools and also requiring no special assembly equipment. In the described embodiments simple stop means are provided for determining the rearwardly most inclined position and the forwardly most inclined position of the separators.

**Claims**

1. A filing and storage container suitable for containing floppy disks, floppy diskettes and the like, said container comprising means forming a container case (10) having a bottom, upstanding side walls, a front wall and a rear wall (16), said base having means forming divider tabs (40) positioned at spaced intervals at least in the region where one of the side walls engages the bottom, separator means (60) disposed at least partially within said base means (10) and held in spaced apart relationship by said divider tabs (40), said separator means being rotatable between rearwardly inclined positions and forwardly inclined positions, characterised in that the rear wall (16) leans rearwardly, and the front wall leans forwardly and has a height less than the height of the rear wall, and in that a cover (12) is provided, the cover having a top, a downwardly extending front wall and side walls and a rear side (22), and means (14) for pivotally attaching said side walls to said base portion so that the cover means can be rotated from a closed position covering said base and said separator means to an open position, and so that the cover means can be pivotally rotated beyond the open position into a support position wherein the rear side (22) of said cover engages said bottom (10), said cover means then serving as a support for said base, holding it in a raised position above a supporting surface.

2. A filing and storage container according to claim 1, further comprising stop means disposed above said divider means and forming forward and rear stops to be engaged by said separator means (60) so as to define said forwardly inclined positions and said rearwardly inclined positions.

3. A filing and storage container according to claim 2, wherein said stop means is formed by at least one side rail (46), said rail having projections (54) extending downwardly therefrom to form said forward and rear stops.

4. A filing and storage container according to claim 3, wherein said separator means (60) are provided with laterally extending tabs (63) for engaging said rail projections (54) to limit rotation of said separator means (60).

5. A filing and storage container according to claim 3 or claim 4, wherein said side rail (46) is affixed to said base (10) by inserting the ends of the side rail into openings (42, 44) in said base.

6. A filing and storage container according to claims 3, 4 or 5, wherein said projections (54) are generally triangular in shape and extend downwardly from the main rail body, said forward and rear stops being formed by opposite sides of said triangular projections.

7. A filing and storage container according to any one of the preceding claims wherein the rear wall (16) of the base (10) includes means (36) located in the upper portion thereof forming a hand hold for facilitating the carrying of the container.

8. A filing and storage container according to any one of the preceding claims wherein the separator means (60) comprise separator bodies each provided with grooves (64, 66) formed along their upper edges and each having an indexing tab with projections (70, 72) which slidably engage the grooves in the separator body to allow the indexing tab to be attached to and selectively positioned along an upper portion of the separator body.

9. A filing and storing container according to any one of the preceding claims wherein the rear wall (16) of the base and the front wall of the cover both incline rearwardly and lie substantially parallel to the planes of the separator means when the separator means are in their rearwardly inclined positions.

**Patentansprüche**

1. Nachfüll- und Lagerbehälter, geeignet, zum Aufbewahren von Floppy-Disks (Speicherscheiben, Disketten u. dgl.), der Mittel aufweist, die einen Behältergrundteil (10) bilden, das einen Boden besitzt, stehende Seitenwände, eine Vorderwand und eine Rückwand (16), wobei das Grundteil Mittel besitzt, die Teilvorsprünge (40) bilden, angeordnet in beabstandeten Zwischenräumen, zumindest in dem Bereich, in dem eine der Seitenwände mit dem Boden zusammenwirkt, Trennmittel (60), die zumindest teilweise in dem Grundteil (10) angeordnet sind, und in voneinander beabstandeter Beziehung durch die Teilvorsprünge gehalten sind, wobei die Trennmittel drehbar gehalten sind zwischen nach rückwärts geneigten Stellungen und nach vorwärts geneigten Stellungen, dadurch gekennzeichnet, daß die rückwärtige Wand (16) rückwärtig geneigt ist, und die vordere Wand nach vorwärts geneigt ist, un eine Höhe besitzt, die geringer ist als die Höhe der rückwärtigen Wand, und daß eine Abdeckung (12) vorgesehen ist, die ein Oberteil besitzt, eine nach unten sich erstreckende Vorderwand und Seitenwände und eine Rückwand (22), und Mittel (14) für eine drehbare Anbringung der Seitenwände an dem Grundbereich, so daß die Abdeckmittel von einer geschlossenen Position, die den Grundbereich und die Trennmittel abdeckt in eine geöffnete Position gedreht werden kann, und so, daß die Abdeckmittel drehbar bewegt, werden können über die Öffnungsstellung in eine Stützstellung, in der die rückwärtige Seite (22) der Abdeckung mit dem Boden (10) zusammenwirkt, wobei die Abdeckmittel als Abstützung für das Grundteil dient, indem sie es in einer erhobenen Position oberhalb der Abstützfläche hält.

2. Nachfüll- und Lagerbehälter für Disketten nach Anspruch 1, weiter gekennzeichnet durch Stoppmittel, die oberhalb der Trennmittel angeordnet sind und einen vorderen und einen rückwärtigen Stopp bilden, um mit den Trennmitteln (60) zusammenzuwirken, um so die nach vorne geneigten und rückwärtig geneigten Positionen zu bilden.

3. Ein Nachfüll- und Lagerbehälter nach Anspruch 2, bei dem die Stoppmittel durch zumindest eine Seitenschiene (46) gebildet sind, wobei die Schiene Vorsprünge (54) aufweist, die sich nach unten von derselben erstrecken, zur Bildung vorderer und rückwärtiger Stopps.

4. Nachfüll- und Lagerbehälter nach Anspruch 3, bei dem die Trennmittel (60) mit seitlich sich erstreckenden Vorsprüngen (63) vorgesehen sind, zur Zusammenwirkung mit Schienenvorsprüngen (54), um eine Drehung der Trennmittel (60) zu begrenzen.

5. Nachfüll- und Lagerbehälter nach einem der Ansprüche 3 oder 4, dadurch gekennzeichnet, daß die Seitenschiene (46) an dem Grundteil (10) befestigt ist durch eine Einführung der Enden der Seitenschiene in Öffnungen (42, 44) in dem Grundteil.

6. Nachfüll- und Lagerbehälter nach einem der Ansprüche 3, 4 oder 5, bei dem die Vorsprünge 54 im wesentlichen eine dreiecksförmige Gestalt aufweisen und sich nach unten von dem Hauptschienenkörper erstrecken, wobei die vorderen und rückwärtigen Stopps durch entgegengesetzte Seiten der dreieckigen Vorsprünge ausgebildet sind.

7. Nachfüll- und Lagerbehälter nach einem der vorstehenden Ansprüche, dadurch gekennzeichnet, daß die Rückwärtige Wand (16) des Grundteils (10) Mittel (36) aufweist, die in einem oberen Bereich derselben angeordnet sind, zur Bildung einer Handhalterung, um ein Tragen des Behältnisses zu erleichtern.

8. Nachfüll- und Lagerbehälter nach einem der vorstehenden Ansprüche, bei dem die Trennmittel (60) Trennkörper aufweisen, die jeweils mit Nuten (64, 66) versehen sind, die entlang deren oberen Ecken ausgebildet sind, und jeweils ein einteilende Nase mit Vorsprüngen (70, 72) besitzen, die gleitbar mit den Ausnehmungen in dem Trennkörper zusammenwirken, um einer einteilenden Nase zu ermöglichen, angebracht und gesondert positioniert zu werden entlang einem oberen Bereich des Trennkörpers.

9. Nachfüll- und Aufbewahrungsbehältnis nach einem der vorstehenden Ansprüche, bei dem die rückwärtige Wand (16) des Grundteils und die vordere Wand der Abdeckung jeweils nach rückwärts geneigt sind und im wesentlichen parallel zu den Ebenen der Trennmittel liegen, wenn die Trennmittel sich in ihren rückwärtigen, geneigten Positionen befinden.

### Revendications

1. Boîte de classement et de rangement adaptée à contenir des disques souples, des disquettes souples et similaires, comprenant des éléments constituant un support de boîte (10) ayant un fond, des parois latérales verticales, une paroi avant et une paroi arrière (16), ledit support ayant des éléments constituant des pointes de division (40) disposées à intervalles réguliers tout au moins dans la zone où l'une des parois latérales s'engage dans le fond, des éléments de séparation (60) disposés au moins en partie à l'intérieur desdits éléments de support (10) et maintenus écartés par lesdites pointes de division (40), lesdits éléments de séparation étant rotatifs entre les positions inclinées vers l'arrière et les positions inclinées vers l'avant, caractérisée en ce que la paroi arrière (16) est inclinée vers l'arrière et que la paroi avant est inclinée vers l'avant et a une hauteur inférieure à celle de la paroi arrière, et ce qu'est prévu un couvercle (12) ayant un dessus, une paroi avant et des parois latérales s'étendant vers le bas et un côté arrière (22), et des éléments (14) pour fixer, pivotantes, lesdits parois latérales audit support, de telle sorte que les éléments du couvercle puissent être tournés de la position fermée recouvrant ledit support et lesdits éléments de séparation, à la position ouverte, et de telle sorte que les éléments du couvercle puissent être tournés par pivotement au-delà de la position ouverte, dans une position d'appui dans laquelle le côté arrière (22) dudit couvercle s'engage dans ledit fond (10), lesdits éléments de couvercle servant alors d'appui audit support et le maintenant dans une position soulevée au-dessus d'une surface d'appui.

2. Boîte selon la revendication 1, caractérisée en ce qu'elle comporte en outre des éléments d'arrêt disposés au-dessus desdits éléments de division et constituant des butées avant et arrière contre lesquelles doivent s'engager lesdits éléments de séparation (60) afin de définir lesdites positions inclinées vers l'avant et lesdites positions inclinées vers l'arrière.

3. Boîte selon la revendication 2, caractérisée en ce que l'élément d'arrêt est constitué au moins d'un rail latéral (46) ayant des saillies (54) s'étendant vers le bas pour constituer lesdites butées avant et arrière.

4. Boîte selon la revendication 3, caractérisée en ce que lesdits éléments de séparation (60) sont dotés de bandes latérales (63) s'engageant dans lesdites saillies (54) de rail, afin de limiter la rotation desdits éléments de séparation (60).

5. Boîte selon la revendication 3 ou 4, caractérisée en ce que ledit rail latéral (46) est fixé audit support (10) en introduisant les extrémités du rail dans les ouvertures (42, 44) pratiquées sur ledit support.

6. Boîte selon les revendications 3, 4 ou 5, caractérisée en ce que lesdites saillies (54) ont généralement une forme triangulaire et s'étendent vers le bas du corps principal du rail, lesdites butées avant et arrière étant constituées par les côtés opposés desdites saillies triangulaires.

7. Boîte selon l'une quelconque des revendications précédentes, caractérisée en ce que la paroi arrière (16) du support (10) comporte des éléments (36) situés dans sa partie supérieure et constituant une prise pour faciliter le transport.

8. Boîte selon l'une quelconque des revendications précédentes, caractérisée en ce que les éléments de séparation (60) comportent des corps de séparation, chacun étant doté de rainures (64, 66) constituées le long de leurs bords supérieurs et chacune ayant une plaquette de division avec des saillies (70, 72) qui s'engagent par glissement dans les rainures pratiquées sur le corps de séparation, pour permettre à la plaquette de division d'être fixée à une partie supérieure du corps de séparation et d'être positionnée à volonté le long de celle-ci.

9. Boîte selon l'une quelconque des revendications précédentes, caractérisée en ce que la paroi arrière (16) du support et la paroi avant du couvercle sont toutes les deux inclinées vers l'arrière et sont sensiblement parallèles aux plans des éléments de séparation, lorsque ces derniers se trouvent dans leur position inclinée vers l'arrière.

Fig_1

Fig_2

Fig_3

Fig_5

Fig_6

1

Fig_4a

Fig_4b

Fig_4

Fig_7

Fig_8